# FASCICULE DE BREVET EUROPEEN

(11) **EP 1 743 441 B1**
(45) Date de publication et mention de la délivrance du brevet: **24.07.2013**
(21) Numéro de dépôt: 04731634.4
(22) Date de dépôt: 07.05.2004
(51) Int. Cl.: H04J 3/08

(54) **PROCEDE ET SYSTEME DE PROTECTION D'UN RESEAU DE COMMUNICATION, LEDIT RESEAU DE COMMUNICATION INCLUANT UN RESEAU DE TRANSPORT**
VERFAHREN UND SYSTEM ZUM SCHUTZ EINES KOMMUNIKATIONSNETZES, DAS EIN TRANSPORTNETZ UMFASST
METHOD AND SYSTEM FOR PROTECTING A COMMUNICATIONS NETWORK COMPRISING A TRANSPORT NETWORK

(43) Date de publication de la demande: 17.01.2007
(73) Titulaire: FRANCE TELECOM, 75015 Paris (FR)
(72) Inventeur: LEMOINE, Benoît, F-22300 Lannion (FR); LE FOLL, Morgane, F-92130 Issy-Les-Moulineaux (FR); CALVIGNAC, Géraldine, F-22560 Trébeurden (FR)
(74) Mandataire: Vidon, Patrice
(86) Numéro de dépôt international: PCT/EP2004/005077
(87) Numéro de publication internationale: WO 2005/109706

(56) Documents cités:
- EP-A- 1 063 865
- PATENT ABSTRACTS OF JAPAN vol. 2000, no. 03, 30 mars 2000 (2000-03-30) & JP 11 355314 A (NEC CORP), 24 décembre 1999 (1999-12-24)

## Description

La présente invention concerne un système de protection d'un réseau de communication, ledit réseau de communication incluant un réseau de transport et des routeurs respectivement raccordés audit réseau de transport par des sections de raccordement.

La présente invention s'applique tout particulièrement, mais non exclusivement, à des réseaux de communication dits réseaux longue distance, par exemple du type IP (acronyme d'Internet Protocol : Protocole Internet), MPLS (acronyme de Multi-Protocol Label Switching : commutation par étiquette multiprotocole) ou encore ATM (acronyme d'Asynchronous Transfert Mode : Mode de transfert asynchrone). La suite de la description sera essentiellement basée sur des réseaux du type IP sur MPLS (notés dans la description IP/MPLS) donnés uniquement à titre d'exemple mais on comprendra que l'invention n'est pas limitée à de tels réseaux. Un exemple de ce type de réseau est divulgué par le document JP11355314, NEC-Corporation, publié le 24/12/1999.

On rappelle que les réseaux MPLS sont décrits dans des spécifications de l'organisme IETF (Internet Engineering Task Force) et sont essentiellement basés sur des technologies à commutation de paquets comportant une étiquette à longueur fixe (appelée également label) en correspondance avec une adresse IP. Ces paquets suivent dans le réseau longue distance un chemin qui est généralement appelé LSP (Label Switched Path). Les réseaux longue distance du type MPLS dont il est question ici sont soit en mode non connecté, par exemple basé sur le protocole dit LDP (Label Distribution Protocol) soit en mode connecté, par exemple du type IP/MPLS-TE.

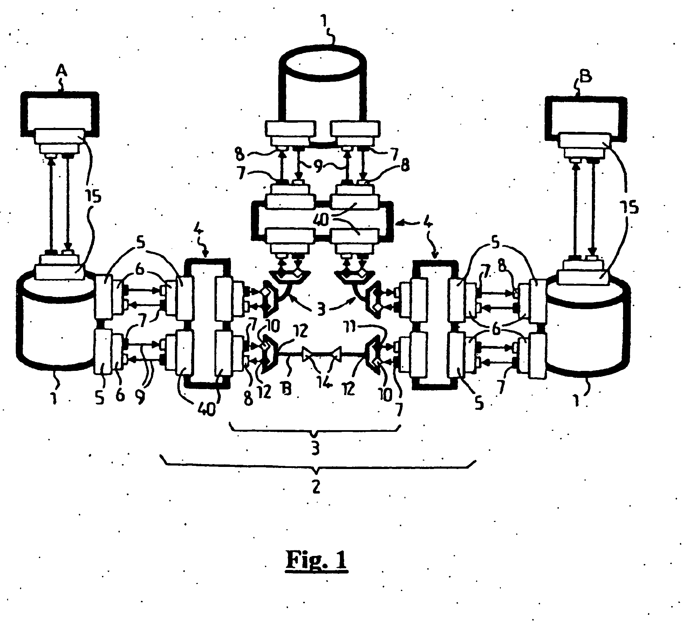

La Fig. 1 représente l'architecture d'un réseau longue distance, par exemple du type IP/MPLS, permettant en l'occurrence la communication entre un utilisateur A et un utilisateur distant B au moyen de paquets. Il est constitué d'une pluralité de routeurs 1, par exemple du type IP/MPLS, interconnectés par un ou plusieurs réseaux de transport longue distance 2.

Un réseau de transport longue distance 2 comprend en général un ou plusieurs systèmes de transmission longue distance point à point 3, par exemple du type optique à multiplexage par division de longueur d'ondes WDM (Wavelength Division Multiplexing) interconnectant différents équipements 4, par exemple des multiplexeurs à insertion/extraction 40 (ou des brasseurs) avec ou sans plan de commande, mais aussi des équipements de régénération (A la Fig. 1, de tels équipements ne sont pas représentés), qui, au niveau physique, supportent une hiérarchique numérique synchrone, par exemple du type SONET ou SDH (on dira par la suite SONET/SDH).

On pourra se reporter notamment aux recommandations UIT-T G.707 et G.783 pour de plus amples informations en ce qui concerne la hiérarchie SDH. Les réseaux optiques, supportant une hiérarchique numérique synchrone, par exemple SDH, du type à plan de commande sont l'objet du premier amendement à la Recommandation ITU-T G.8080/Y.1304 (2001) intitulé : Architecture du réseau optique à commutation automatique (ASON).

En terminologie du standard SDH, on appelle "conduit" (Path) le support de communication entre deux équipements de terminaison ou équipements d'extrémité de conduit (Path Terminating Elément), en l'occurrence deux routeurs 1, "section de multiplexage" (Multiplex section) le support de communication entre deux équipements de multiplexage 40 ou entre un équipement de terminaison, en l'occurrence un routeur 1, et un équipement de multiplexage et "section de régénération" le support de communication entre deux équipements de régénération ou entre un équipement de multiplexage 40et un équipement de régénération. A des fins de généralité, dans la présente description, on appellera "section" ou "section de raccordement" le support de communication entre deux équipements SONET/SDH.

Dans la suite, on considérera que les équipements d'extrémité de conduit sont des routeurs tels que les routeurs 1.

Les équipements SONET/SDH 4 sont également reliés aux routeurs IP/MPLS 1 et, pour ce faire, les routeurs IP/MPLS et les équipements SONET/SDH disposent de cartes 5 d'interfaces SONET/SDH comprenant elles-mêmes un ou plusieurs ports 6 SONET/SDH. Chaque port SONET/SDH dispose d'un transmetteur optique 7 (en général un laser convertissant un signal électrique modulé en un signal optique modulé) et d'un récepteur optique 8 (en général une photodiode convertissant un signal optique modulé en un signal électrique modulé). Des fibres optiques ou des aboutements de fibres optiques 9 sont en général utilisées pour relier le transmetteur optique 7 d'un premier port SONET/SDH 6 au récepteur optique 8 d'un second port SONET/SDH 6 et pour relier le transmetteur optique 7 du deuxième port SONET/SDH 6 au récepteur optique 8 du premier port SONET/SDH 6.

Les systèmes de transmission longue distance de type WDM 3 comprennent en général, d'une part, des transpondeurs d'émission 10 convertissant le signal optique modulé de porteuse quelconque reçu d'un transmetteur optique 7 d'un port SONET/SDH 6 en un signal optique modulé dont la porteuse est précisément connue et, d'autre part, des transpondeurs de réception 11 convertissant un signal optique modulé dont la porteuse est précisément connue reçu d'un transpondeur 10 en un signal optique modulé de porteuse quelconque qui est alors fourni à un récepteur optique 8 d'un port SONET/SDH. Ils comportent encore des multiplexeurs/démultiplexeurs 12 permettant de transmettre sur une même fibre optique 13 plusieurs signaux optiques modulés dont les porteuses sont différentes et de séparer en fonction de leur porteuse les signaux optiques modulés reçus sur une même fibre. Ils comportent encore des amplificateurs de ligne 14 permettant de régénérer le signal optique à l'extrémité d'une fibre optique avant de le réinjecter dans la fibre optique suivante. Des fibres optiques ou des aboutements de fibres optiques (non référencés) sont en général utilisés pour relier les transpondeurs d'émission 10 aux multiplexeurs/démultiplexeurs 12, les multiplexeurs/démultiplexeurs 12 aux amplificateurs de ligne 14, les amplificateurs de ligne 14 aux multiplexeurs/démultiplexeurs 12 et les multiplexeurs/démultiplexeurs 12 aux transpondeurs de réception 11. De même, des fibres optiques ou des aboutements de fibres optiques (non référencés) sont en général utilisés pour relier un transmetteur optique 7 d'un port SONET/SDH 6 à un transpondeur d'émission 10 d'un système de transmission longue distance 3 ainsi que pour relier le récepteur optique 8 du même port SONET/SDH 6 à un transpondeur de réception 11 du même système de transmission longue distance 3.

Enfin pour relier les équipements utilisateurs A et B aux routeurs IP/MPLS 1, ceux-ci ainsi que les équipements utilisateurs A et B disposent en général de cartes 15 qui peuvent par exemple supporter; au niveau de la couche physique, ou le protocole Ethernet ou le protocole SONET/SDH.

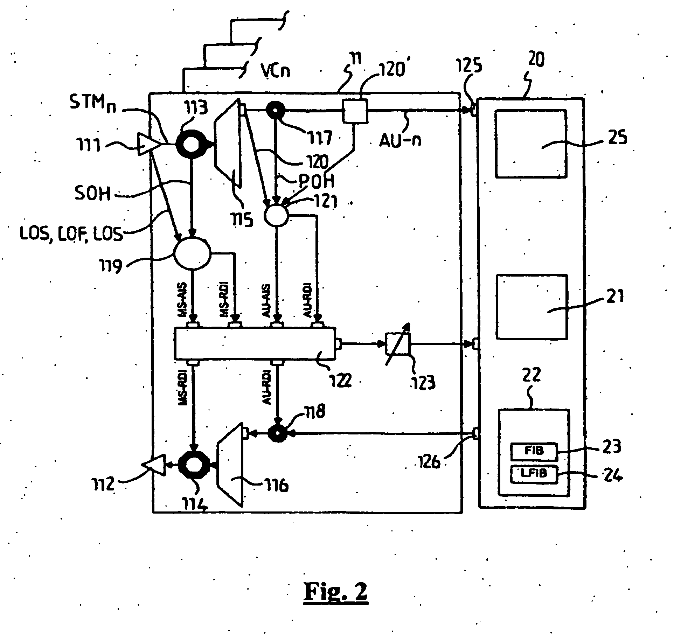

On va maintenant décrire en relation avec la Fig. 2 un routeur IP/MPLS tel que les routeurs 1 du réseau IP/MPLS représenté à la Fig. 1. Un tel routeur IP/MPLS est généralement constitué d'un ou plusieurs ports 11 (un seul port SONET/SDH est complètement représenté à là Fig. 2) et une unité de routage 20.

Un port SONET/SDH 11 comprend un récepteur optique 111 réalisé en général par une photodiode qui convertit un signal optique modulé en un signal numérique et un transmetteur optique 112 réalisé en général par un laser optique qui convertit un signal numérique en un signal optique modulé.

On rappelle ici que les hiérarchies SONET (Synchronous Optical Network) et SDH (Synchronous Digital Hierarchy) concernent des systèmes de transmission synchrone par module de transport synchrone (STM : Synchronous Transport Module pour SDH) sous forme de trames synchrones, comprenant une en-tête de section de multiplexage (SOH: Section Overhead) et une charge utile essentiellement constituée d'un ou plusieurs containers virtuels (VC : Virtual container) de différents niveaux hiérarchiques : VC4 et VC3 pour les containers de haut niveaux et VC2 et VC1 pour les containers de bas niveaux. Chacun de ces containers virtuels comprennent également une entête POH (Path Overhead) et une charge utile généralement notée AU-n (Administrative Unit, level n). On rappelle que l'on peut se reporter notamment aux recommandations UIT-T G.707 et G.783 pour de plus amples informations en ce qui concerne la hiérarchie SDH.

Dans un port à hiérarchie synchrone d'un routeur IP/MPLS tel que celui qui est représenté à la Fig. 2, du module de transport synchrone STM présent à la sortie du récepteur optique 111 est extraite son entête SOH dans une unité d'extraction 113. Sa charge utile est démultiplexée dans une unité de démultiplexage 115 pour recouvrer les containers virtuels VC dont sont extraites les entêtes POH dans une unité d'extraction 117 à la sortie de laquelle sont disponibles les unités administratives AU-n correspondantes. Côté émission, les unités administratives AU-n deviennent des containers virtuels après adjonction d'une entête POH dans une unité 118, qui sont alors multiplexés dans une unité de multiplexage 116, étant entendu que les containers virtuels peuvent être associés par une concaténation contiguë ou virtuelle de manière à être regroupés ou être directement utilisés, puis deviennent des modules de transport synchrone après adjonction de l'entête SOH correspondant. Enfin, les modules de transport STM sont fournis au transmetteur 112.

L'unité de routage 20 comporte une unité de commande de routage 21, une unité de transfert 22 incluant notamment une table d'aiguillage 23 basée sur l'adresse IP (FIB : Forward Information Base) ainsi qu'une table d'aiguillage 24 basée sur l'étiquette MPLS (LFIB : Label Forward Information Base) et, enfin, une unité 25 d'affectation de ports logiques en relation avec les ports physiques 125 et 126 de l'unité de routage 20. Ces ports physiques 125 et 126 sont reliés aux sorties correspondantes des ports physiques (non référencés) du ou des ports 11. Le transfert d'un paquet IP/MPLS consiste donc à l'aiguiller d'un port logique d'entrée vers un port logique de sortie en fonction de son adresse IP de destination ou en fonction de l'étiquette MPLS du chemin LSP qu'il empreinte dans le réseau de transport SONET/SDH. Les tables d'aiguillage IP et les tables d'aiguillage MPLS sont en général utilisées lors de cette opération.

La table d'aiguillage IP 23 stocke en général des préfixes IP et pour chaque préfixe IP, l'identifiant du port logique vers lequel il faut envoyer les paquets IP dont les adresses IP de destination appartiennent à ce préfixe IP. Elle peut également stocker des préfixes IP et pour chaque préfixe IP, l'identifiant du port logique vers lequel il faut envoyer les paquets IP dont les adresses IP de destination appartiennent à ce préfixe IP, ainsi que le label MPLS à ajouter au paquet IP lorsque celui-ci entre dans un trajet LSP de commutation par label MPLS (trajet nommé LSP, acronyme de Label Switched Path) qui mène à la destination.

La table d'aiguillage MPLS 24 stocke en général les labels MPLS des trajets LSP du réseau et, pour chaque label MPLS, l'identifiant du port logique de sortie vers lequel il faut envoyer un paquet MPLS marqué par ce label, ainsi que l'action à effectuer sur le label : le remplacer par un nouveau label MPLS lorsque le paquet considéré est en transit de trajet LSP et, dans ce cas, faire figurer la valeur du label du nouveau trajet LSP dans la table d'aiguillage MPLS, ou supprimer ce label dans le cas où le paquet sort du réseau MPLS.

En général, un port logique est associé à un ou plusieurs ports physiques. Dans le cas où les ports physiques sont des ports SONET/SDH, un port logique peut être associé à un ou plusieurs conduits SONET/SDH (on entend par conduit tout container virtuel concaténé ou virtuellement concaténé) unidirectionnels ou bidirectionnels. Dans le cas de conduits SONET/SDH unidirectionnels, l'entrée d'un port logique est associée à la sortie d'un ou plusieurs conduits SONET/SDH unidirectionnels et la sortie d'un port logique est associée à l'entrée d'un ou plusieurs conduits SONET/SDH unidirectionnels. Dans le cas de conduits SONET/SDH bidirectionnels, l'entrée d'un port logique est associée à la sortie d'un ou plusieurs conduits SONET/SDH bidirectionnels et la sortie d'un port logique est associée à l'entrée du ou des mêmes conduits SONET/SDH bidirectionnels.

Dans le cas où les ports physiques sont des ports SONET/SDH, les paquets IP/MPLS sont en général encapsulés au niveau physique dans des trames PPP/HDLC (Point-to-Point Protocol/High-level Data Link Control : voir requête en commentaires RFC1662), elles-mêmes encapsulées dans des containers virtuels (concaténés ou virtuellement concaténés) SONET/SDH ; les paquets IP/MPLS peuvent également être encapsulés sous d'autres formats standardisés, par exemple utilisant notamment un tramage GFP (Generic Framing Procédure), elles-mêmes encapsulées dans des containers virtuels (concaténés ou virtuellement concaténés) SONET/SDH.

Chaque élément (équipement, ligne de section de raccordement, etc.) d'un réseau IP/MPLS longue distance ou du réseau de transport longue distance qu'il inclut est susceptible de défaillir. Les défaillances les plus courantes sont consécutives à la coupure par des engins de travaux civils des fibres optiques enterrées sur de longues distances et qui relient les différents éléments des systèmes de transmission longue distance. D'autres types de défaillance sont possibles, notamment la panne matérielle d'un équipement de réseau ou encore la panne logicielle d'une carte d'un routeur IP/MPLS.

Les routeurs IP/MPLS disposent en général de plusieurs mécanismes permettant de rétablir le trafic IP/MPLS impacté par une panne survenant dans le réseau IP/MPLS longue distance. On peut citer entre autres le reroutage IP ou MPLS en mode non connecté, par exemple basé sur le protocol LDP, qui permet de rétablir le trafic IP en général en quelques secondes après la défaillance, la restauration MPLS-TE (MPLS Traffic Engineering) qui permet de rétablir le trafic MPLS en général en quelques secondes après la défaillance, la protection MPLS-TE de bout en bout qui permet en général de rétablir le trafic MPLS en quelques centaines de millisecondes après la défaillance et la protection locale MPLS-TE qui permet en général de rétablir le trafic MPLS en quelques dizaines de millisecondes après la défaillance.

Réalisé en général par les unités de routage 20 des routeurs IP/MPLS 1, le reroutage IP consiste à recalculer de nouvelles tables d'aiguillage IP en supprimant de la topologie les liens impactés par la défaillance et en déterminant un nouveau chemin vers chaque préfixe IP destination. Lorsque le chemin vers un préfixe a changé et que, de ce fait, le port logique est devenu différent, les informations contenues dans la ou les tables d'aiguillage IP 23 pour ce préfixe sont modifiées en considérant que les paquets IP ne doivent plus être envoyés sur les ports logiques correspondant au chemin impacté par la défaillance, mais vers l'un des autres ports logiques correspondant au nouveau chemin. Le processus de mise à jour des tables d'aiguillage IP dure en général plusieurs secondes car il nécessite l'échange de paquets IP de commande entre les routeurs IP/MPLS. Le temps du re-routage correspond alors au temps de détection de la panne, au temps de propagation de l'information à travers le réseau, au délai possible avant recalcul des nouvelles routes, du recalcul des routes, puis au temps pour la mise à jour des informations dans les tables d'aiguillage.

Egalement réalisée en général par les unités de routage 20 des routeurs IP/MPLS 1, la restauration MPLS-TE consiste en général à recalculer la route des trajets LSP impactés par la défaillance et à remplacer la ou les tables d'aiguillage MPLS 24 par une ou de nouvelles tables comprenant pour chaque étiquette ou label MPLS associé à l'identifiant d'un port logique impacté par la défaillance, un nouvel identifiant de port logique et un nouveau label MPLS. La restauration MPLS-TE est un peu plus rapide que le reroutage IP, mais peut durer quelques secondes. Elle nécessite en effet d'attendre la propagation de l'information de panne jusqu'aux routeurs de tête des trajets LPS qui recalculent ensuite leurs chemins.

Egalement réalisée en général par les unités de routage 20 des routeurs IP/MPLS 1, la protection MPLS-TE de bout en bout consiste en général à remplacer les tables d'aiguillage MPLS 24 par de nouvelles tables comprenant pour chaque label. MPLS associé à l'identifiant d'un port logique impacté par la défaillance, un identifiant de port logique de secours et un label MPLS de secours qui sont prédéterminés. La protection de bout en bout MPLS-TE est plus rapide que la restauration MPLS-TE car elle ne nécessite pas de recalcul de la route des trajets LSP et car elle consiste à basculer un trajet LSP sur un autre de protection pré-établi, mais peut quand même durer plusieurs centaines de millisecondes (car nécessite toujours d'attendre la propagation de l'information de panne jusqu'aux routeurs de tête des LPS MPLS-TE).

Enfin, réalisée en général cette fois par les cartes de commutation de paquet, la protection locale MPLS-TE consiste en général à remplacer dans les tables de labels MPLS l'identifiant d'un port logique impacté par la défaillance par l'identifiant d'un port logique de secours et un label MPLS correspondant au tronçon de secours qui sont, tous les deux également prédéterminés. La protection locale MPLS-TE est en général rapide et ne dure que quelques dizaines de millisecondes, car elle est effectuée par le routeur directement en amont de la panne et consiste à basculer les trajets LSP au plus près de la panne sur des tronçons de secours prédéterminés.

Quant aux équipements SONET/SDH, ils disposent eux aussi de plusieurs mécanismes permettant de rétablir un conduit SONET/SDH impacté par une panne survenant dans le réseau de transport longue distance. On peut citer notamment, d'une part, des mécanismes de protection, tels que la protection de section de multiplexage, la protection de conduit, la protection partagée en anneau de section de multiplexage et la restauration dynamique, qui permettent de limiter à moins de 50 millisecondes l'interruption d'un conduit SONET/SDH impacté par une défaillance et, d'autre part, des mécanismes de restauration dynamique, par exemple mis en oeuvre par un plan de commande tel que celui qui est mentionné ci-dessus en référence à la recommandation G.8080 de l'ITU-T, qui permettent de limiter à quelques secondes l'interruption d'un conduit SONET/SDH impacté par une défaillance.

La protection de section de multiplexage consiste à dupliquer les modules de transmission synchrones SONET/SDH et à les envoyer sur deux sections de multiplexage SONET/SDH disjointes. Si l'une des sections de multiplexage SONET/SDH est défaillante, c'est le module de transmission synchrone reçu de l'autre section de multiplexage SONET/SDH qui est utilisé.

A la détection d'un défaut dans une section de multiplexage (ou d'une section de régénération) d'un réseau de transport SONET/SDH, au moins deux types d'alarme dite SONET/SDH sont émises: les alarmes de section de multiplexage SONET/SDH (MS : Multiplex section) et les alarmes de conduit SONET/SDH (AU : Administrative Unit). Pour chacun de ces deux types d'alarme, on distingue les alarmes directes (dites AIS : Alarm Indication Signal) et les alarmes indirectes (dites RDI : Remote Defect Indication).

Les alarmes directes de section de multiplexage (MS-AIS : Multiplex section-Alarm Indication Signal) sont générées par l'unité locale d'un port SONET/SDH d'un équipement du réseau de transport, par exemple, lors d'une perte de signal optique (LOS : Loss of Signal) sur son récepteur optique, lors d'une perte de synchronisation du signal numérique, lors de la perte du début de trame SONET/SDH (LOF : Loss Of Frame), ou encore par exemple lors d'une perte de pointeur (LOP : Loss Of Pointer). En ce qui concerne le port 11 d'un routeur 1, l'unité locale est l'unité 119 représentée à la Fig. 2.

Quant aux alarmes indirectes de section de multiplexage (MS-RDI : Multiplex Section-Remote Defect Indication), elles sont déduites d'informations contenues dans le module de multiplex reçu, par exemple dans le cas du système SDH, de la valeur des positions 6, 7 et 8 de l'octet K2 de l'en-tête (SOH) de section de multiplexage. Ces alarmes indirectes de section de multiplexage MS-RDI peuvent être insérées, par exemple par le marquage des positions 6, 7 et 8 de l'octet K2, et ce au moyen d'une l'unité d'insertion telle que l'unité d'insertion 114 du port 11 1 représenté à la Fig. 2, dans un module de transport synchrone STM en partance du port concerné suite, soit à la réception dans l'autre sens de transmission d'une alarme directe de section de multiplexage MS-AIS afin d'avertir, en retour, l'extrémité émettrice, soit à la détection par le port lui-même d'un défaut de section entrant (section de multiplexage ou section de régénération).

L'alarme directe de conduit SONET/SDH (AU-AIS: Administrative Unit-Alarm Indication Signal) est générée par tout équipement SONET/SDH lorsque aucun signal numérique ne peut être démultiplexé en une unité administrative AU-n (voir référence 120). Une fois une telle alarme directe de conduit AU-AIS détectée, elle est propagée vers les équipements SONET/SDH qui se trouvent en aval en général en positionnant tous les bits de la charge utile du container concerné à 1 (on parle alors d'un signal partout à 1), évitant ainsi une nouvelle détection en aval. Pour que cette propagation puisse se faire jusqu'à l'équipement de terminaison de conduit, une alarme directe de conduit SONET/SDH AU-AIS est également générée par tout équipement à la réception d'une charge utile de conduit dont tous les bits sont à 1 (voir référence 120').

Quant à l'alarme indirecte de conduit SONET/SDH (AU-RDI : Administrative Unit-Remote Defect Indication), elle est également déduite d'informations contenues dans l'en-tête POH du container correspondant, par exemple dans le cas du système SDH, de la valeur de la position 5 de l'octet G1 contenu dans l'en-tête POH de chaque containeur virtuel. Ces alarmes indirectes de conduit AU-RDI peuvent être insérées, dans un routeur IP/MPLS, par exemple par le marquage de la position 5 de l'octet G1, et ce au moyen d'un unité d'insertion telle que l'unité 114 représentée à la Fig. 2, dans l'en-tête POH de tout container du conduit correspondant suite, soit à la réception dans l'autre sens de transmission d'une alarme directe de conduit AU-AIS afin d'avertir, en retour, l'extrémité émettrice, soit à la détection par le port lui-même d'un défaut de démultiplexage concernant ce conduit.

Les alarmes de conduit AU-AIS et AU-RDI sont générées par une unité 121.

Ainsi, les cartes d'interfaces SONET/SDH d'un routeur IP/MPLS génèrent deux types d'alarmes SONET/SDH dites distantes car transmises à l'équipement' SONET/SDH distant, généralement en amont: les alarmes de section de multiplexage distantes (MS-RDI) et les alarmes de conduit SONET/SDH distantes (AU-RDI). Ces alarmes sont en général générées dans une unité de gestion des alarmes 122 en fonction des alarmes SONET/SDH reçues en général sur la section de multiplexage du même port et en général sur le containeur virtuel SONET/SDH de la même position sur la section de multiplexage du même port.

On notera que pour simplifier il n'a pas été envisagé ici les alarmes directes ou indirectes de section de régénération.

La table ci-dessous indique (marquage par une croix) dans quels cas en général ces alarmes distantes sont générées par les cartes d'interface SONET/SDH d'un routeur IP/MPLS.

| Entrées de l'unité de gestion 122 | | | | Sorties de l'unité 122 | |
|---|---|---|---|---|---|
| MS-AIS | MS-RDI | AU-AIS | AU-RDI | MS-RDI | AU-RDI |
| | | X | | | X |
| | | | X | | |
| X | | X | | x | x |
| X | X | | X | | |
| X | | | | x | |
| | X | | | | |

Par exemple, lorsqu'une alarme AU-AIS est détectée par l'unité 121 (en amont du port), une alarme AU-RDI est insérée dans les containers du conduit correspondant en partance du port vers l'amont dudit port. Etc.

Dans le cas d'un réseau de communication du type IP/MPLS, en général, les routeurs IP/MPLS au plus près de l'élément du réseau qui est le siège d'une défaillance sur le réseau IP/MPLS longue distance se basent sur les alarmes SONET/SDH décrites ci-dessus pour déclencher les mécanismes de protection/restauration IP/MPLS également décrits ci-dessus pour rétablir le trafic IP/MPLS. Quant aux routeurs éloignés de cet élément, ils se basent en général plutôt sur la réception de messages de commande IP/MPLS.

Ainsi, pour chaque conduit SONET/SDH, chaque port SONET/SDH 11 d'un routeur IP/MPLS 1 doit fournir les alarmes SONET/SDH aux unités de routage du même routeur des leurs détections. Le reroutage IP est en général déclenché puis effectué par la ou les unités de routage 20 du routeur 1 au plus près de l'élément défaillant dès réception par cette unité de l'alarme SONET/SDH.

De manière générale, l'invention concerne un système de protection d'un réseau de communication, ledit réseau de communication incluant un réseau de transport et des équipements d'extrémité de conduit, tels que des routeurs respectivement raccordés audit réseau de transport par des sections de raccordement, ledit système de protection comprenant, pour chaque conduit de communication entre deux desdits équipements d'extrémité de conduit, d'un premier système de protection et d'un second système de protection.

L'invention s'applique notamment lorsque ledit réseau de transport est un réseau à hiérarchie synchrone du type SDH du SONET, le premier système de protection étant mis en oeuvre pour le rétablissement du conduit SDH ou SONET entre les deux routeurs qui forment lesdits équipements d'extrémité de conduit. Ledit second système de protection est notamment un système de protection/restauration du type IP/MPLS.

La mise en oeuvre simultanée de mécanismes de protection/restauration IP/MPLS et de mécanismes protection/restauration SONET/SDH dans un réseau IP/MPLS longue distance supporté par des équipements SONET/SDH nécessite une coordination entre les routeurs IP/MPLS et les équipements SONET/SDH. En effet, si l'élément défaillant appartient au réseau de transport SONET/SDH, c'est uniquement le mécanisme de protection/restauration SONET/SDH qui doit être déclenché car, dans le cas contraire, les mécanismes de protection/restauration IP/MPLS pourraient perturber inutilement et sur une durée plus longue le trafic. A l'inverse, si la défaillance est située hors du champ d'action des mécanismes de protection, SONET/SDH, en l'occurrence sur les sections de raccordement entre le réseau de transport 3 et les équipements d'extrémité de conduit tels que les routeurs 1, les mécanismes de protection/restauration IP/MPLS doivent réagir le plus rapidement possible.

Pour assurer cette mise en oeuvre simultanée des mécanismes de protection/restauration IP/MPLS et SONET/SDH, un procédé connu qui est mis en oeuvre sur des routeurs IP/MPLS existants consiste à masquer de façon indifférente pendant une certaine période de temps, dont la durée est configurable de 0 secondes (masquage désactivé) jusqu'à une valeur de plusieurs secondes, par paliers d'une ou de plusieurs millisecondes, toute information d'alarme SONET/SDH que le port SONET/SDH 11 fournit à unité de routage 20. Des moyens de masquage 123 sont alors utilisés pour masquer tous les messages d'alarme SONET/SDH destinés à être transmis à l'unité de routage 20 (voir Fig. 2).

Ainsi, les mécanismes de protection/restauration SONET/SDH sont mis en oeuvre, quand cela est possible, pendant la période de masquage et, ce n'est que lorsqu'ils ne peuvent aboutir, que les mécanismes de protection/restauration IP/MPLS sont mis en oeuvre.

Ce procédé est efficace dans le cas où l'ensemble du conduit SONET/SDH est protégé (c'est-à-dire par une protection/restauration du type SONET/SDH), aussi bien sur le réseau de transport longue distance 3 (par exemple avec une protection dédiée de bout en bout, ou alors avec une protection partagée en anneau de section de multiplexage, ou encore avec de la restauration dynamique) que sur les sections de raccordement entre chaque routeurs IP/MPLS 1 à un équipements SONET/SDH du réseau de transport 3 (par exemple avec une protection de section de multiplexage).

Néanmoins, l'utilisation simultanée des mécanismes de protection/restauration IP/MPLS et des mécanismes de protection/restauration SONET/SDH est en générale coûteuse du fait notamment de l'utilisation de la protection de section de multiplexage qui implique que soit mise en oeuvre sur les routeurs IP/MPLS deux fois plus de ports SONET/SDH que si les sections de raccordement n'étaient pas protégées par un mécanisme de protection SONET/SDH. Or les ports SONET/SDH des routeurs IP/MPLS sont plus chers que les ports SONET/SDH des équipements SONET/SDH.

Le but de la présente invention est dé proposer un système de protection qui permette de résoudre le problème du coût de la mise en oeuvre de la protection/restauration SONET/SDH de section de multiplexage, notamment en ce qui concerne les sections de raccordement entre les routeurs et le réseau de transport.

A cet effet, un système de protection d'un réseau de communication selon la présente invention est caractérisé en ce que, pour chaque conduit de communication entre deux desdits équipements d'extrémité de conduit,
- ledit premier système de protection est mis en oeuvre lors de la détection d'un défaut dans ledit réseau de transport, ledit réseau de transport émettant alors une alarme directe de conduit à destination de l'équipement d'extrémité de conduit à l'extrémité aval dudit conduit, et
- ledit second système de protection mis en oeuvre soit après détection, par l'un des équipements d'extrémité de conduit, d'un défaut sur la section de raccordement le raccordant audit réseau de transport, soit à la réception, par le équipement à l'extrémité aval dudit conduit, d'une alarme directe ou indirecte de conduit émise par ledit réseau de transport,
ledit second système de protection étant mis en oeuvre avec un retard plus important après réception d'une alarme de conduit qu'après détection d'un défaut sur la section de raccordement entre ledit réseau de transport et ledit équipement d'extrémité de conduit ou qu'après réception d'une alarme indirecte de conduit.

Un système de protection selon l'invention s'applique à un réseau de communication dont chaque équipement d'extrémité de conduit comprend des moyens de déclenchement pour déclencher la mise en oeuvre dudit second système de protection ainsi que l'émission d'une alarme indirecte de conduit à destination, via ledit réseau de transport, de l'équipement à l'extrémité amont dudit conduit. Dans ce cas, chaque équipement d'extrémité de conduit comprend des moyens pour retarder le déclenchement desdits moyens de déclenchement avec un retard plus important après réception d'une alarme de conduit qu'après détection d'un défaut sur la section de raccordement entre ledit réseau de transport.

Avantageusement, la durée de chaque retard appliqué pour un conduit est indépendante de celle de chaque retard appliqué pour tout autre conduit dudit réseau de communication.

La présente invention concerne également un procédé de protection d'un réseau de communication, tel qu'il vient d'être décrit, qui comporte, pour chaque conduit de communication entre deux desdits équipements d'extrémité de conduit, une première étape de protection et une seconde étape de protection.

Ce procédé est caractérisé en ce que ladite première étape de protection est mise en oeuvre lors de la détection d'un défaut dans ledit réseau de transport, ladite étape incluant l'émission d'une alarme directe de conduit à destination de l'équipement d'extrémité de conduit à l'extrémité aval dudit conduit, en ce que
ladite seconde étape de protection est mise en oeuvre soit après détection, par l'un des équipements d'extrémité de conduit, d'un défaut sur la section de raccordement le raccordant audit réseau de transport, soit à la réception, par l'équipement à l'extrémité aval dudit conduit, d'une alarme directe ou indirecte de conduit émise par ledit réseau de transport, et qui est alors caractérisé en ce que
ladite seconde étape de protection est mise en oeuvre avec un retard plus important après réception d'une alarme directe de conduit qu'après détection d'un défaut sur la section de raccordement entre ledit réseau de transport et ledit équipement d'extrémité de conduit ou qu'après réception d'une alarme indirecte de conduit.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est une vue générale synoptique d'un réseau de communication du type IP/MPLS auquel la présente invention peut s'appliquer,
La Fig. 2 est une vue générale synoptique d'un routeur de l'état de la technique,
La Fig. 3 est une vue générale synoptique d'un routeur équipé des moyens de la présente invention, et
Les Figs. 4a à 4c sont trois schémas d'explication de la mise en oeuvre des mécanismes de restauration de la présenté invention appliqués à trois défauts respectivement détectés à trois endroits différents du réseau de communication.

La base de la présente invention est de trouver une solution au problème de coût élevé mentionné ci-dessus dans la protection des sections de raccordement reliant les équipements d'extrémité de conduit, tels que les routeurs IP/MPLS 1, aux équipements SONET/SDH du réseau de transport 3, non pas par un mécanisme de protection SONET/SDH, mais seulement par l'un des mécanismes de protection/restauration IP/MPLS sur le trafic de paquets IP/MPLS de cette section de raccordement. Néanmoins, pour éviter que les mécanismes de protection/restauration IP/MPLS perturbent inutilement et sur une durée plus longue.le trafic de paquets IP/MPLS, les mécanismes de protection/restauration IP/MPLS doivent être déclenchés sans délai si la défaillance est survenue sur la section de raccordement des routeurs IP/MPLS aux équipements SONET/SDH, alors que si elle est survenue dans le réseau de transport longue distance, ils ne doivent pas être déclenchés ou seulement être déclenchés tardivement.

On comprendra que le procédé de l'état de la technique qui a été décrit précédemment et qui consiste à masquer pendant une certaine période de temps et de façon indifférente toute information d'alarme SONET/SDH que le port 11 SONET/SDH doit normalement fournir à l'unité de routage 20 ne permet pas de réaliser efficacement ce comportement. En effet, si la durée du masquage d'information d'alarme SONET/SDH est configurée à 0 seconde (le masquage est désactivé), une alarme de défaillance générée pendant un court instant (une ou plusieurs millisecondes) par un équipement SONET/SDH suite à une défaillance survenue dans le réseau due transport et qui impacte un conduit SONET/SDH (cette alarme est du type VC-AIS, c'est-à-dire de conduit SONET/SDH), déclenche immédiatement les mécanismes de protection/restauration IP/MPLS et ce, jusque avant le rétablissement du conduit SONET/SDH par le mécanisme de protection/restauration SONET/SDH mise en oeuvre dans le réseau de transport longue distance. Par contre si la durée du masquage d'information d'alarme SONET/SDH est configurée strictement supérieure à 0 seconde (le masquage est activé), une alarme de défaillance de la section de multiplexage suite à une défaillance de la section de raccordement reliant un routeur IP/MPLS à un équipement SONET/SDH ne déclenchera pas immédiatement les mécanismes de protection/restauration IP/MPLS permettant seuls de rétablir le trafic IPIMPLS qui emprunte les conduits SONET/SDH supportés par cette section de multiplexage, mais seulement après la durée du masquage d'information d'alarme SONET/SDH.

Par conséquent, la présente invention propose une solution qui permet également de résoudre le problème de l'inefficacité du procédé décrit précédemment dans le cas où des mécanismes de protection/restauration SONET/SDH sont mis en oeuvre dans le réseau de transport longue distance excepté sur les sections de raccordement reliant les routeurs IP/MPLS et les équipements SONET/SDH, et ou des mécanismes de protection/restauration IP/MPLS sont mis en oeuvre dans le réseau IPIMPLS longue distance.

Lé réseau de communication auquel s'applique la présente invention inclut donc un réseau de transport, par exemple du type à hiérarchie synchrone SDH ou SONET, et des routeurs, par exemple du type IP/MPLS, respectivement raccordés audit réseau de transport SDH/SONET, par des sections de raccordement. Selon la présente invention, ledit système de protection comprend, pour chaque conduit de communication entre deux desdits routeurs,
- un premier système de protection, (du type SDH/SONET dans le cas où le réseau de transport est du type SDH/SONET) mis en oeuvre lors de la détection d'un défaut dans ledit réseau de transport, ledit réseau de transport émettant alors une alarme directe de conduit (généralement noté AU-AIS) à destination du routeur à l'extrémité aval dudit conduit, et
- un second système de protection (par exemple du type IP/MPLS) mis en oeuvre soit après détection, par l'un des routeurs d'extrémité dudit conduit, d'un défaut sur la section de raccordement le raccordant audit réseau de transport, soit à la réception, par le routeur à l'extrémité aval dudit conduit, d'une alarme de conduit émise par ledit réseau de transport.

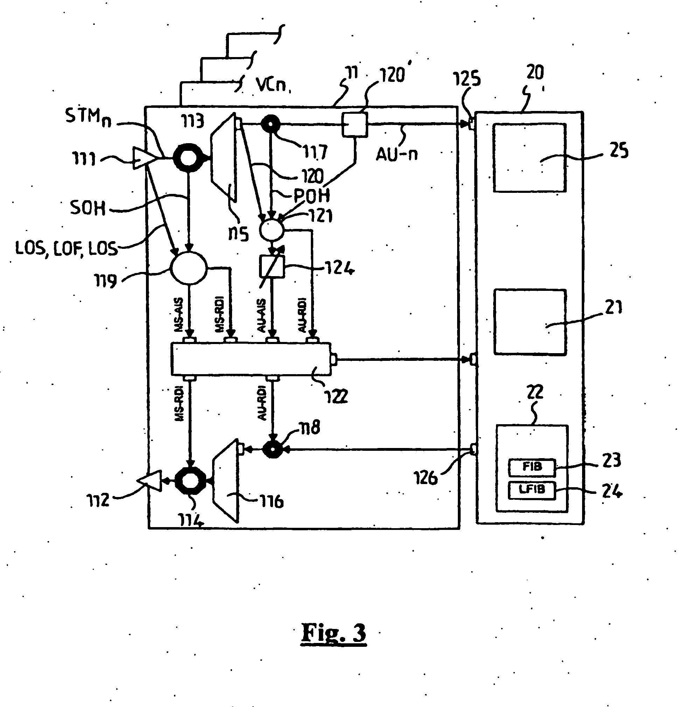

A la Fig. 3, les mêmes éléments qui ceux qui sont déjà présents à la Fig. 2 portent les mêmes références.

Le routeur montré à la Fig. 3 diffère de celui qui est représenté à la Fig. 2 en ce l'élément de masquage 123 n'existe plus et en ce qu'un nouvel élément de masquage 124 est prévu pour masquer uniquement les alarmes directes de conduit SONET/SDH, c'est-à-dire du type AU-AIS. A la Fig. 3, cet élément de masquage est placé entre l'unité 121 et l'unité 120. Ainsi, le masquage est appliqué non seulement à destination des autres cartes du routeur IP/MPLS mais également à destination de l'unité qui génère les alarmes indirectes de conduit SONET/SDH, c'est-à-dire du type AU-RDI.

Ainsi, le procédé de la présente invention consiste à ne plus appliquer le masquage d'information d'alarme de façon indifférenciée à toutes les alarmes SONET/SDH comme cela était le cas dans le procédé connu explicité ci-dessus, mais uniquement aux alarmes directes AU-AIS de conduit SONET/SDH.

De manière plus générale, en tenant compte du fait qu'il peut être avantageux de retarder toutes les alarmes, notamment les alarmes MS-AIS, la présente invention consiste en des moyens permettant à la protection du type IP/MPLS d'être mise en oeuvre avec un retard plus important après réception d'une alarme de conduit AU-AIS qu'après détection d'un défaut sur la section de raccordement entre ledit réseau de transport et ledit routeur, c'est-à-dire après détection d'une alarme MS-AIS ou autre différente d'AU-AIS.

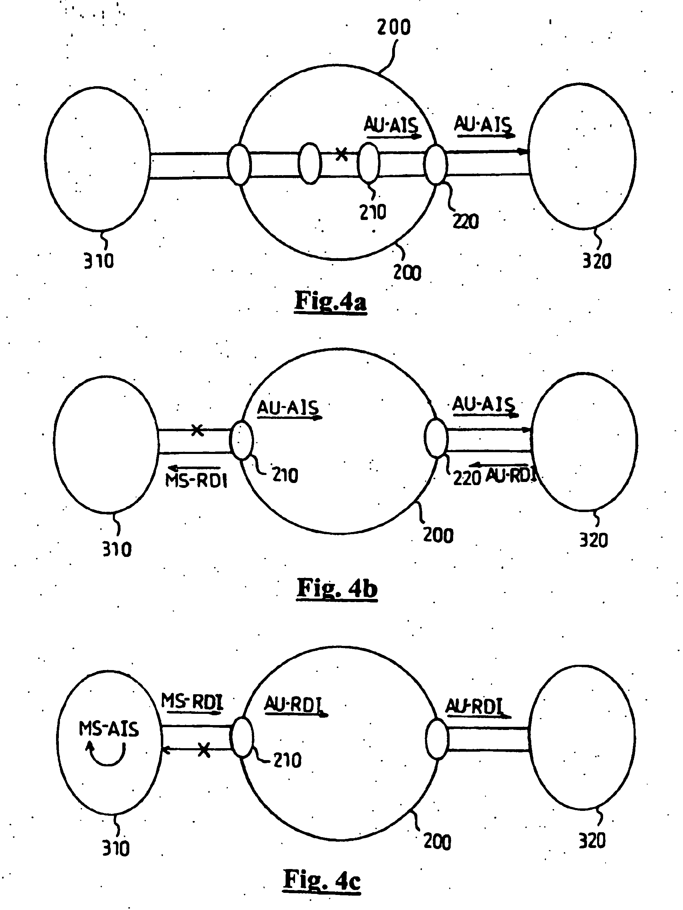

Le fonctionnement de la présente invention est maintenant décrit en relation avec les Figs. 4a, 4b et 4c où l'on a représenté schématiquement un réseau de transport du type SONET/SDH 200 constitué d'une pluralité d'équipements SONET/SDH 210, 220, 230, etc. et relié à deux routeurs IP/MPLS 310 et 320.

Lorsqu'une défaillance (représenté par un croix) survient dans le réseau de transport longue distance 200, par exemple dans une section entre deux équipements SONET/SDH (voir Fig. 4a), l'équipement SONET/SDH 210 en aval de la défaillance génère, du fait qu'il se trouve en extrémité de section, une alarme directe de conduit SONET/SDH (AU-AIS), qui est normalement propagée jusqu'à la carte d'interface SONET/SDH du routeur IP/MPLS 320 (par exemple, par la technique du "signal tout à 1"). Immédiatement, est déclenchée la protection SONET/SDH pour la restauration de la section concernée. Classiquement aussi, aucune alarme de section de multiplexage (MS-AIS ou MS-RDI) n'apparaît sur la section de raccordement reliant le routeur IP/MPLS 320 à l'équipement SONET/SDH le plus proche 220. L'élément de masquage d'information d'alarme 124 masque ou retarde pendant une durée donnée l'alarme AU-AIS à l'unité de routage 20 du routeur IP/MPLS 320 en aval de la défaillance, si bien qu'aucune protection IP/MPLS n'est déclenchée immédiatement et que le trafic MPLS continue d'emprunter le sens du conduit SONET/SDH non impacté par la défaillance. De plus, l'élément de masquage d'information d'alarme 124, du fait qu'il est situé entre l'unité 121 et l'unité 122 du port 11 du routeur 320, masque pendant une durée donnée l'alarme AU-AIS également à l'unité 122 qui est normalement prévue pour générer l'alarme indirecte de conduit SONET/SDH (AU-RDI). Il en résulte que le routeur 310 en amont de la défaillance ne reçoit pas immédiatement ou pas d'alarme distante de défaillance de conduit SONET/SDH (AU-RDI) et que, par conséquent, il ne déclenche pas de protection IP/MPLS. Pendant ce temps, la protection SONET/SDH du réseau de transport longue distance 200 rétablit les conduits SONET/SDH impactés par la défaillance en un temps donné. On notera que l'alarme AU-AIS n'est alors plus transmise à la carte SONET/SDH du routeur IP/MPLS en aval de la défaillance avant que le temps de masquage d'alarme ne soit écoulé. Dans ce cas de figure, aucune protection IP/MPLS n'est déclenchée.

On notera également que, si l'équipement directement en aval du défaut est un équipement de régénération, cet équipement émettra une alarme directe de section de multiplexage MS-AIS et que c'est seulement l'équipement en aval de la section de multiplexage dans laquelle est intervenue le défaut qui émettra une alarme directe de conduit AU-AIS. En définitive, cela ne change pas le processus au niveau du routeur aval 320.

Lorsqu'une défaillance survient sur une section de raccordement qui relie un routeur IP/MPLS 310 au premier équipement SONET/SDH 210 du réseau de transport longue distance 200, dans le sens du routeur IP/MPLS 310 vers l'équipement SONET/SDH 210 (voir Fig. 4b), cet équipement SONET/SDH 210 génère une alarme indirecte de section de multiplexage (MS-RDI) dans le sens inverse, qui est alors détectée par le routeur IP/MPLS local 310. L'information d'alarme indirecte de section de multiplexage (MS-RDI) est retransmise immédiatement à l'unité de routage 20 du routeur IP/MPLS 310, ce qui déclenche immédiatement soit un reroutage IP, soit le basculement local de l'une des protections MPLS-TE de bout en bout ou locale pour le trafic MPLS protégé. L'équipement SONET/SDH 210 en aval de la défaillance génère également une alarme directe de conduit SONET/SDH (AU-AIS) (étant à l'extrémité aval d'une section de multiplexage), qui est propagée (par exemple par la technique du signal tout à 1) en aval de la défaillance jusqu'au port SONET/SDH. 11 de l'équipement d'extrémité de conduit, en l'occurrence le routeur IP/MPLS distant 320. Sur ce routeur IP/MPLS distant 320, cette alarme directe de conduit SONET/SDH (AU-AIS) est masquée pendant une durée donnée, pendant laquelle le trafic MPLS protégé (mais qui n'emprunte pas encore son chemin LSP de protection) continue d'emprunter le sens du conduit SONET/SDH non impacté par la défaillance. A la fin de cette durée, l'information d'alarme directe de conduit SONET/SDH (AU-AIS) est transmise; d'une part, à l'unité de routage 20 du routeur IP/MPLS local 310, ce qui déclenche le basculement local de l'une des protections IP/MPLS de bout en bout ou locale pour le trafic MPLS ou IP protégé et, d'autre part, à l'élément 118 qui doit générer alarme indirecte de conduit SONET/SDH (AU-RDI) dans le sens opposé à la défaillance.

Lorsqu'une défaillance survient sur un lien de raccordement reliant un routeur IP/MPLS 310 au premier équipement SONET/SDH 210 du réseau de transport longue distance 200, dans le sens de l'équipement SONET/SDH 210 vers le routeur IP/MPLS 310 (voir Fig. 4c), le port SONET/SDH 11 du routeur IP/MPLS 310 transmet immédiatement (il n'y a pas de masquage) à l'unité de routage 20 du routeur l'alarme directe de section de multiplexage (MS-AIS) qu'elle détecte. L'unité de routage 20 du routeur IP/MPLS 310 déclenche alors immédiatement soit un reroutage IP/MPLS, soit le basculement local de l'une des protections MPLS-TE de bout en bout ou locale pour le trafic MPLS protégé. De même, l'information d'alarme directe de section de multiplexage (MS-AIS) est retransmise immédiatement à l'élément 122 qui génère dans le sens inverse une alarme indirecte de section de multiplexage (MS-RDI) qui est détectée uniquement par l'équipement SONET/SDH 210 de rattachement ainsi qu'une alarme indirecte de conduit SONET/SDH (AU-RDI) qui est détectée par le routeur IP/MPLS distant 320, ce qui déclenche immédiatement le basculement local de l'une des protections IP/MPLS de bout en bout ou locale pour le trafic MPLS ou IP protégé.

Selon une autre caractéristique de la présente invention, la configuration de la durée de masquage d'information d'alarme directe de conduit SONET/SDH (AU-AIS) est indépendante pour chacun des conduits SONET/SDH supportés par la carte SONET/SDH du routeur IP/MPLS. Cela permet de désactiver le masquage d'alarme (durée configurée à 0 secondes) pour certains conduits SONET/SDH non protégés par un mécanisme de protection/restauration SONET/SDH du réseau de transport longue distance, ou de l'activer (durée configurée à une valeur strictement supérieur à 0) jusqu'à une valeur de plusieurs secondes, par paliers de une ou plusieurs millisecondes, en fonction du type de protection/restauration SONET/SDH qui protège chacun des autres conduits sur le réseau de transport longue distance (protection dédiée de conduit en moins de 50 millisecondes, protection partagée en anneau de section de multiplexage en moins de 50 millisecondes, ou restauration dynamique en quelques secondes).

## Revendications

1. Système de protection d'un réseau de communication, ledit réseau de communication incluant un réseau de transport (3) et des équipements dits d'extrémité de conduit (1), tels que des routeurs, respectivement raccordés audit réseau de transport (3) par des sections de raccordement, ledit système de protection disposant d'un premier et d'un second systèmes de protection, pour chaque conduit de communication entre deux desdits équipements d'extrémité de conduit (1),
- ledit premier système de protection étant mis en oeuvre lors de la détection d'un défaut dans ledit réseau de transport (3), ledit réseau de transport (3) émettant alors une alarme directe de conduit (AU-AIS) à destination de l'équipement (1) à l'extrémité aval dudit conduit, et
- ledit second système de protection étant mis en oeuvre soit après détection, par l'un des équipements d'extrémité dudit conduit (1), d'un défaut sur la section de raccordement le raccordant audit réseau de transport, soit à la réception, par l'équipement (1) à l'extrémité aval dudit conduit, d'une alarme directe ou indirecte de conduit (AU-AIS, AU-RDI) émise par ledit réseau de transport (3),
ledit système est **caractérisé en ce que** ledit second système de protection est mis en oeuvre avec un retard plus important après réception d'une alarme directe de conduit (AU-AIS) qu'après détection d'un défaut sur la section de raccordement entre ledit réseau de transport (3) et ledit équipement d'extrémité de conduit (1).

2. Système de protection d'un réseau de communication selon la revendication 1, **caractérisé en ce que** ledit réseau de transport est un réseau à hiérarchie synchrone du type SDH ou SONET, le premier système de protection étant un système de protection/restauration mis en oeuvre pour le rétablissement du conduit SDH ou SONET entre les deux dits équipements d'extrémité de conduit.

3. Système de protection d'un réseau de communication selon la revendication 1 ou 2, **caractérisé en ce que** ledit second système de protection est un système de protection/restauration du type IP, MPLS ou ATM.

4. Système de protection d'un réseau de communication selon une des revendications précédentes, chaque équipement d'extrémité de conduit (1) comprenant des moyens de déclenchement pour déclencher la mise en oeuvre dudit second système de protection ainsi que l'émission d'une alarme indirecte de conduit (AU-RDI) à destination, via ledit réseau de transport (3), de l'équipement à l'extrémité amont dudit conduit, **caractérisé en ce que** chaque équipement d'extrémité de conduit (1) comprend des moyens pour retarder le déclenchement desdits moyens de déclenchement avec un retard plus important après réception d'une alarme directe de conduit (AU-AIS) qu'après détection d'un défaut sur la section de raccordement entre ledit réseau de transport (3) et ledit équipement d'extrémité de conduit (1).

5. Système de protection d'un réseau de communication selon une des revendications précédentes, **caractérisé en ce que** la durée de chaque retard appliqué pour un conduit est indépendante de celle du retard appliqué pour tout autre conduit dudit réseau de communication.

6. Procédé de protection d'un réseau de communication, ledit réseau de communication incluant un réseau de transport (3) et des équipements dits d'extrémité de conduit (1), tels que des routeurs, respectivement raccordés audit réseau de transport (3) par des sections de raccordement, ledit procédé de protection disposant, pour chaque conduit de communication entre deux desdits routeurs, d'une première étape de protection et d'une seconde étape de protection,
- ladite première étape de protection étant mise en oeuvre lors de la détection d'un défaut dans ledit réseau de transport (3), ladite étape incluant l'émission d'une alarme directe de conduit (AU-AIS) à destination de l'équipement d'extrémité de conduit (1) à l'extrémité aval dudit conduit, et
- ladite seconde étape de protection étant mise en oeuvre soit après détection, par l'un des équipement d'extrémité de conduit (1), d'un défaut sur la section de raccordement le raccordant audit réseau de transport (3), soit à la réception, par ledit équipement (1) à l'extrémité aval dudit conduit, d'une alarme directe ou indirecte de conduit (AU-AIS , AU-RDI) émise par ledit réseau de transport,
ledit procédé est **caractérisé en ce que** ladite seconde étape de protection est mise en oeuvre avec un retard plus important après réception d'une alarme directe de conduit (AU-AIS) qu'après détection d'un défaut sur la section de raccordement entre ledit réseau de transport et ledit équipement d'extrémité de conduit ou qu'après réception d'une alarme indirecte de conduit (AU-RDI).

7. Procédé de protection d'un réseau de communication selon la revendication 6, ledit procédé comprenant une étape de déclenchement de ladite seconde étape de protection ainsi que l'émission d'une alarme indirecte de conduit à destination, via ledit réseau de transport, de l'équipement d'extrémité de conduit à l'extrémité amont dudit conduit, **caractérisé en ce qu'**il comprend une étape de retard de la mise en oeuvre de l'étape de déclenchement avec un retard plus important après réception d'une alarme de conduit qu'après détection d'un défaut sur la section de raccordement entre ledit réseau de transport et ledit équipement d'extrémité de conduit.

8. Procédé de protection d'un réseau de communication selon une des revendications 6 ou 7 **caractérisé en ce que** la durée de chaque retard appliqué pour un conduit est indépendante de celle de chaque retard appliqué pour tout autre conduit dudit réseau de communication.

9. Equipement dit d'extrémité de conduit (1) raccordé au réseau de transport (3) d'un réseau de télécommunication par une section de raccordement, **caractérisé en ce qu'**il comprend, pour chaque conduit de communication vers un deuxième équipement dit d'extrémité de conduit:
- des moyens de déclenchement d'un premier système de protection à réception d'une alarme directe de conduit (AU-AIS) en provenance dudit réseau de transport (3),
- des moyens de déclenchement d'un second système de protection mis en oeuvre soit après détection d'un défaut sur la section de raccordement le raccordant audit réseau de transport, soit à la réception d'une alarme directe ou indirecte de conduit (AU-AIS, AU-RDI) émise par ledit réseau de transport (3),
lesdits moyens de déclenchement du second système de protection sont mis en oeuvre avec un retard plus important après réception d'une alarme directe de conduit (AU-AIS) qu'après détection d'un défaut sur la section de raccordement entre ledit réseau de transport (3) et ledit équipement d'extrémité de conduit (1).

## Patentansprüche

1. System zum Schutz eines Kommunikationsnetzes, wobei das Kommunikationsnetz ein Transportnetz (3) und so genannte Leitungsendeinrichtungen (1) wie etwa Router aufweist, die jeweils an das Transportnetz (3) über Anschlussabschnitte angeschlossen sind, wobei das Schutzsystem über ein erstes und über ein zweites Schutzsystem für jede Kommunikationsleitung zwischen zwei der Leitungsendeinrichtungen (1) verfügt,
- wobei das erste Schutzsystem bei der Detektion eines Fehlers in dem Transportnetz (3) eingesetzt wird, wobei das Transportnetz (3) dann einen direkten Leitungsalarm (AU-AIS) an die Einrichtung (1) am stromabwärtigen Ende der Leitung sendet, und
- wobei das zweite Schutzsystem entweder nach Detektion, durch eine der Endeinrichtungen der Leitung (1), eines Fehlers auf dem sie mit dem Transportnetz verbindenden Anschlussabschnitt eingesetzt wird, oder beim Empfang, durch die Einrichtung (1) am stromabwärtigen Ende der Leitung, eines direkten oder indirekten Leitungsalarms (AU-AIS, AU-RDI), der von dem Transportnetz (3) gesendet wird,
wobei das System **dadurch gekennzeichnet ist, dass** das zweite Schutzsystem nach Empfang eines direkten Leitungsalarms (AU-AIS) mit einer größeren Verzögerung eingesetzt wird, als nach Detektion eines Fehlers auf dem Anschlussabschnitt zwischen dem Transportnetz (3) und der Leitungsendeinrichtung (1).

2. System zum Schutz eines Kommunikationsnetzes nach Anspruch 1, **dadurch gekennzeichnet, dass** das Transportnetz ein Netz mit synchroner Hierarchie vom Typ SDH oder SONET ist, wobei das erste Schutzsystem ein Schutz-/Wiederherstellungssystem ist, das zur Wiederherstellung der SDH- oder SONET-Leitung zwischen den zwei betreffenden Leitungsendeinrichtungen eingesetzt wird.

3. System zum Schutz eines Kommunikationsnetzes nach Anspruch 1 oder 2, **dadurch gekennzeichnet, dass** das zweite Schutzsystem ein Schutz-/Wiederherstellungssystem vom Typ IP, MPLS oder ATM ist.

4. System zum Schutz eines Kommunikationsnetzes nach einem der vorhergehenden Ansprüche, wobei jede Leitungsendeinrichtung (1) Auslösemittel zum Auslösen des Einsatzes des zweiten Schutzsystems sowie des Sendens eines indirekten Leitungsalarms (AU-RDI) über das Transportnetz (3) an die Einrichtung am stromaufwärtigen Ende der Leitung aufweist, **dadurch gekennzeichnet, dass** jede Leitungsendeinrichtung (1) Mittel zum Verzögern der Auslösung der Auslösemittel mit einer größeren Verzögerung nach Empfang eines direkten Leitungsalarms (AU-AIS) als nach Detektion eines Fehlers auf dem Anschlussabschnitt zwischen dem Transportnetz (3) und der Leitungsendeinrichtung (1) aufweist.

5. System zum Schutz eines Kommunikationsnetzes nach einem der vorhergehenden Ansprüche, **dadurch gekennzeichnet, dass** die Dauer jeder Verzögerung, die für eine Leitung angewendet wird, unabhängig von derjenigen der Verzögerung ist, die für jede andere Leitung des Kommunikationsnetzes angewendet wird.

6. Verfahren zum Schutz eines Kommunikationsnetzes, wobei das Kommunikationsnetz ein Transportnetz (3) und so genannte Leitungsendeinrichtungen (1) wie etwa Router aufweist, die jeweils an das Transportnetz (3) über Anschlussabschnitte angeschlossen sind, wobei das Schutzverfahren, für jede Kommunikationsleitung zwischen zwei der Router, über einen ersten Schutzschritt und über einen zweiten Schutzschritt verfügt,
- wobei der erste Schutzschritt bei der Detektion eines Fehlers in dem Transportnetz (3) durchgeführt wird, wobei der Schritt das Senden eines direkten Leitungsalarms (AU-AIS) an die Leitungsendeinrichtung (1) am stromabwärtigen Ende der Leitung beinhaltet, und
- wobei der zweite Schutzschritt entweder nach Detektion, durch eine der Leitungsendeinrichtungen (1), eines Fehlers auf dem sie mit dem Transportnetz (3) verbindenden Anschlussabschnitt durchgeführt wird, oder beim Empfang, durch die Einrichtung (1) am stromabwärtigen Ende der Leitung, eines direkten oder indirekten Leitungsalarms (AU-AIS, AU-RDI), der von dem Transportnetz gesendet wird,
wobei das Verfahren **dadurch gekennzeichnet ist, dass** der zweite Schutzschritt nach Empfang eines direkten Leitungsalarms (AU-AIS) mit einer größeren Verzögerung durchgeführt wird, als nach Detektion eines Fehlers auf dem Anschlussabschnitt zwischen dem Transportnetz und der Leitungsendeinrichtung, oder als nach Empfang eines indirekten Leitungsalarms (AU-RDI).

7. Verfahren zum Schutz eines Kommunikationsnetzes nach Anspruch 6, wobei das Verfahren einen Schritt der Auslösung des zweiten Schutzschrittes sowie des Sendens eines indirekten Leitungsalarms über das Transportnetz an die Leitungsendeinrichtung am stromaufwärtigen Ende der Leitung aufweist, **dadurch gekennzeichnet, dass** es einen Schritt der Verzögerung der Durchführung des Schrittes der Auslösung mit einer größeren Verzögerung nach Empfang eines Leitungsalarms als nach Detektion eines Fehlers auf dem Anschlussabschnitt zwischen dem Transportnetz und der Leitungsendeinrichtung aufweist.

8. Verfahren zum Schutz eines Kommunikationsnetzes nach einem der Ansprüche 6 oder 7, **dadurch gekennzeichnet, dass** die Dauer jeder Verzögerung, die für eine Leitung angewendet wird, unabhängig von derjenigen jeder Verzögerung ist, die für jede andere Leitung des Kommunikationsnetzes angewendet wird.

9. Leitungsendeinrichtung genannte Einrichtung (1), die an das Transportnetz (3) eines Telekommunikationsnetzes über einen Anschlussabschnitt angeschlossen ist, **dadurch gekennzeichnet, dass** sie, für jede Kommunikationsleitung, die zu einer zweiten so genannten Leitungsendeinrichtung führt, Folgendes aufweist:
- Mittel zur Auslösung eines ersten Schutzsystems bei Empfang eines direkten Leitungsalarms (AU-AIS), der von dem Transportnetz (3) stammt,
- Mittel zur Auslösung eines zweiten Schutzsystems, die entweder nach Detektion eines Fehlers auf dem die Leitungsendeinrichtung mit dem Transportnetz verbindenden Anschlussabschnitt eingesetzt werden, oder beim Empfang eines direkten oder indirekten Leitungsalarms (AU-AIS, AU-RDI), der von dem Transportnetz (3) gesendet wird,
wobei die Mittel zur Auslösung des zweiten Schutzsystems nach Empfang eines direkten Leitungsalarms (AU-AIS) mit einer größeren Verzögerung eingesetzt werden, als nach Detektion eines Fehlers auf dem Anschlussabschnitt zwischen dem Transportnetz (3) und der Leitungsendeinrichtung (1).

## Claims

1. System for protecting a communication network, said communication network including a transport network (3) and so-called path terminating elements (1), such as routers, respectively connected to said transport network (3) by connection sections, said protection system employing a first and a second protection system, for each communication path between two of said path terminating elements (1),
- said first protection system being implemented upon the detection of a defect in said transport network (3), said transport network (3) then emitting a direct path alarm (AU-AIS) destined for the element (1) at the downstream termination of said path, and
- said second protection system being implemented either after detection, by one of the terminating elements of said path (1), of a defect on the connection section connecting it to said transport network, or on reception, by the element (1) at the downstream termination of said path, of a direct or indirect path alarm (AU-AIS, AU-RDI) emitted by said transport network (3),
said system is **characterized in that** said second protection system is implemented with a larger delay after reception of a direct path alarm (AU-AIS) than after detection of a defect on the connection section between said transport network (3) and said path terminating element (1).

2. System for protecting a communication network according to Claim 1, **characterized in that** said transport network is a synchronous-hierarchy network of the SDH or SONET type, the first protection system being a protection/restoration system implemented for the reinstatement of the SDH or SONET path between said two path terminating elements.

3. System for protecting a communication network according to Claim 1 or 2, **characterized in that** said second protection system is a protection/restoration system of the IP, MPLS or ATM type.

4. System for protecting a communication network according to one of the preceding claims, each path terminating element (1) comprising triggering means for triggering the implementation of said second protection system as well as the emission of an indirect path alarm (AU-RDI) destined, via said transport network (3), for the element at the upstream termination of said path, **characterized in that** each path terminating element (1) comprises means for delaying the triggering of said triggering means with a larger delay after reception of a direct path alarm (AU-AIS) than after detection of a defect on the connection section between said transport network (3) and said path terminating element (1).

5. System for protecting a communication network according to one of the preceding claims, **characterized in that** the duration of each delay applied for a path is independent of that of the delay applied for any other path of said communication network.

6. Method for protecting a communication network, said communication network including a transport network (3) and so-called path terminating elements (1), such as routers, respectively connected to said transport network (3) by connection sections, said protection method employing, for each communication path between two of said routers, a first protection step and a second protection step,
- said first protection step being implemented upon the detection of a defect in said transport network (3), said step including the emission of a direct path alarm (AU-AIS) destined for the path terminating element (1) at the downstream termination of said path, and
- said second protection step being implemented either after detection, by one of the path terminating elements (1), of a defect on the connection section connecting it to said transport network (3), or on reception, by said element (1) at the downstream termination of said path, of a direct or indirect path alarm (AU-AIS, AU-RDI) emitted by said transport network,
said method is **characterized in that** said second protection step is implemented with a larger delay after reception of a direct path alarm (AU-AIS) than after detection of a defect on the connection section between said transport network and said path terminating element or than after reception of an indirect path alarm (AU-RDI).

7. Method for protecting a communication network according to Claim 6, said method comprising a step of triggering said second protection step as well as the emission of an indirect path alarm destined, via said transport network, for the path terminating element at the upstream termination of said path, **characterized in that** it comprises a step of delaying the implementation of the triggering step with a larger delay after reception of a path alarm than after detection of a defect on the connection section between said transport network and said path terminating element.

8. Method for protecting a communication network according to one of Claims 6 or 7, **characterized in that** the duration of each delay applied for a path is independent of that of each delay applied for any other path of said communication network.

9. So-called path terminating element (1) connected to the transport network (3) of a telecommunication network by a connection section, **characterized in that** it comprises, for each communication path to a second so-called path terminating element;
- means for triggering a first protection system on reception of a direct path alarm (AU-AIS) originating from said transport network (3),
- means for triggering a second protection system implemented either after detection of a defect on the connection section connecting it to said transport network, or on reception of a direct or indirect path alarm (AU-AIS, AU-RDI) emitted by said transport network (3),
said means of triggering said second protection system are implemented with a larger delay after reception of a direct path alarm (AU-AIS) than after detection of a defect on the connection section between said transport network (3) and said path terminating element (1).
